# EUROPEAN PATENT APPLICATION

(11) **EP 3 614 219 A1**
(43) Date of publication of application: **26.02.2020**
(21) Application number: 17906713.7
(22) Date of filing: 20.04.2017
(51) Int. Cl.: G05B 19/418, G06Q 10/04, G06Q 10/06

(54) **CONVEYANCE OPERATION MANAGEMENT DEVICE, SYSTEM, METHOD, AND RECORDING MEDIUM**

(71) Applicant: NEC Corporation, Tokyo 108-8001 (JP)
(72) Inventor: TADANO, Kumiko, Tokyo 108-8001 (JP); MAENO, Yoshiharu, Tokyo 108-8001 (JP)
(74) Representative: Betten & Resch
(86) International application number: PCT/JP2017/015915
(87) International publication number: WO 2018/193585

(57) **Abstract**

In order to enable to identify a transfer operation and movement having a great influence on productivity, the movement involved in the transfer operation, a transfer operation management method includes: calculating, based on a history related to a transfer operation, a total transfer cost for each pair of work stations, and identifying the pair having the maximum total transfer cost as the pair to be improved most, and outputting information of the identified pair.

## Description

### [Technical Field]

The present invention relates to a transfer operation management device, system, and method, and a recording medium which manage a transfer operation between work stations.

### [Background Art]

As a method of improving productivity of a production operation in a factory or the like, for example, PTL 1 describes a method of identifying a bottleneck process to be a fundamental cause of hindering improvement of productivity. This method simulates an influence on an overall production system by intentionally changing production capability of each process, measures an inter-process mutual influence of production variation presented by the simulation, and identify, by a measurement result, a device to be a fundamental cause of hindering improvement of productivity.

### [Citation List]

### [Patent Literature]

[PTL 1] Japanese Unexamined Patent Application Publication No. 2009-157673

### [Summary of Invention]

### [Technical Problem]

However, a method described in PTL 1 does not consider an influence exerted on productivity by a transfer operation between work stations each being a base for performing each process, and movement of a transfer vehicle or a transfer operator involved in the transfer operation. Thus, it is not possible to identify a transfer operation hindering improvement of productivity.

An object of the present invention is to provide a transfer operation management device, system, and method, and a recording medium which enable to identify a transfer operation and movement having a great influence on productivity, the movement involved in the transfer operation.

### [Solution to Problem]

To solve the above-mentioned problem, a transfer operation management device of the present invention comprises: an improvement candidate identification means for calculating, based on a history related to a transfer operation, a total transfer cost for each pair of work stations, and identifying the pair having the maximum total transfer cost as the pair to be improved most, and an output means for outputting information of the identified pair.

A transfer operation management method of the present invention comprises: calculating, based on a history related to a transfer operation, a total transfer cost for each pair of work stations, and identifying the pair having the maximum total transfer cost as the pair to be improved most, and outputting information of the identified pair.

A computer readable recording medium is recorded with a transfer operation management program of the present invention, the program causing a computer to execute: an improvement candidate identification function of calculating, based on a history related to a transfer operation, a total transfer cost for each pair of work stations, and identifying the pair having the maximum total transfer cost as the pair to be improved most, and an output function of outputting information of the identified pair.

### [Advantageous Effects of Invention]

A transfer operation management device, system, and method, and a recording medium of the present invention enable to identify a transfer operation and movement having a great influence on productivity, the movement involved in the transfer operation.

### [Brief Description of Drawings]

Fig. 1 shows a configuration example of a transfer operation management device in a first example embodiment of the present invention.
Fig. 2 shows an operation example of the transfer operation management device in the first example embodiment of the present invention.
Fig. 3 shows a configuration example of a transfer operation management system in a second example embodiment of the present invention.
Fig. 4 shows a configuration example of a work station in the second example embodiment of the present invention.
Fig. 5 shows a configuration example of a work station network in the second example embodiment of the present invention.
Fig. 6 shows a configuration example of a transfer operation management device 20 in the second example embodiment of the present invention.
Fig. 7 shows an example of a history in the second example embodiment of the present invention.
Fig. 8 shows an example of a transfer cost in the second example embodiment of the present invention.
Fig. 9 shows an example of a movement cost in the second example embodiment of the present invention.
Fig. 10 shows an operation example of the transfer operation management device in the second example embodiment of the present invention.
Fig. 11 shows an example of total transfer cost calculation in the second example embodiment of the present invention.
Fig. 12 shows an example of total transfer cost calculation in the second example embodiment of the present invention.
Fig. 13 shows a configuration example of a transfer operation management device in a third example embodiment of the present invention.
Fig. 14 shows an operation example of the transfer operation management device in the third example embodiment of the present invention.
Fig. 15 shows a hardware configuration example in each example embodiment of the present invention.

### [Example Embodiment]

### [First Example Embodiment]

A first example embodiment of the present invention is described.

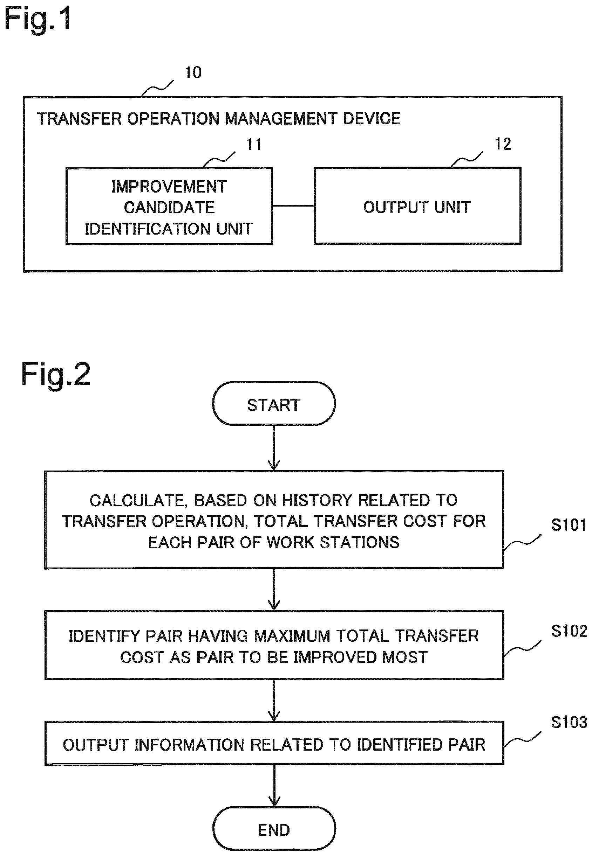

A configuration example of a transfer operation management device 10 in the present example embodiment is shown in Fig. 1.

The transfer operation management device 10 in the present example embodiment includes an improvement candidate identification unit 11 and an output unit 12.

The improvement candidate identification unit 11 is a part which calculates, based on a history related to a transfer operation, a total transfer cost for each pair of work stations, and identifies a pair having a maximum total transfer cost as a pair to be improved most. The output unit 12 is a part which outputs information of the identified pair.

By configuring the transfer operation management device 10 in this way, the transfer operation management device 10 calculates, based on a history related to a transfer operation, a total transfer cost for each pair of work stations, and identifies a pair having a maximum total transfer cost as a pair to be improved most. Consequently, the transfer operation management device 10 becomes able to identify a pair of work stations having a great cost related to a transfer operation and therefore having a great influence on productivity. Thus, it becomes possible to identify a transfer operation and movement having a great influence on productivity, the movement involved in the transfer operation.

Next, an operation example of the transfer operation management device 10 in the present example embodiment is shown in Fig. 2.

First, the improvement candidate identification unit 11 calculates, based on a history related to a transfer operation, a total transfer cost for each pair of work stations (step S101). Next, the improvement candidate identification unit 11 identifies a pair having a maximum total transfer cost as a pair to be improved most (step S102).

Then, the output unit 12 outputs information of the identified pair (step S103).

By operating in this way, the transfer operation management device 10 calculates, based on a history related to a transfer operation, a total transfer cost for each pair of work stations, and identifies a pair having a maximum total transfer cost as a pair to be improved most. Consequently, the transfer operation management device 10 becomes able to identify a pair of work stations having a great cost related to a transfer operation and therefore having a great influence on productivity. Thus, it becomes possible to identify a transfer operation and movement having a great influence on productivity, the movement involved in the transfer operation.

As described above, in the first example embodiment of the present invention, the transfer operation management device 10 calculates, based on a history related to a transfer operation, a total transfer cost for each pair of work stations, and identifies a pair having a maximum total transfer cost as a pair to be improved most. Consequently, the transfer operation management device 10 becomes able to identify a pair of work stations having a great cost related to a transfer operation and therefore having a great influence on productivity. Thus, it becomes possible to identify a transfer operation and movement having a great influence on productivity, the movement involved in the transfer operation.

### [Second Example Embodiment]

Next, a second example embodiment of the present invention is described. In the present example embodiment, a transfer operation management device 20 is more specifically described.

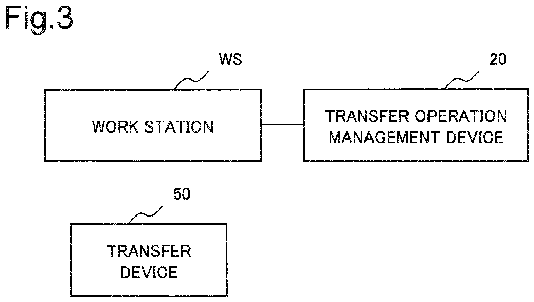

A configuration example of a transfer operation management system in the present example embodiment is shown in Fig. 3. The transfer operation management system in the present example embodiment includes a work station WS (hereinafter, referred to as a WS), the transfer operation management device 20, and a transfer device 50. One or more transfer devices 50 can be present in the transfer operation management system. Moreover, three or more WSs can be present in the transfer operation management system.

The transfer device 50 is a device such as a transfer vehicle which performs a transfer operation from a WS being a transfer source to a WS being a transfer destination. When a transfer operator performs a transfer operation, the transfer device 50 is equivalent to the transfer operator.

A WS is a base for performing processing such as production and inspection. An actual form of a WS is a shop or the like grouping a work cell, a machine having a certain function, or the like.

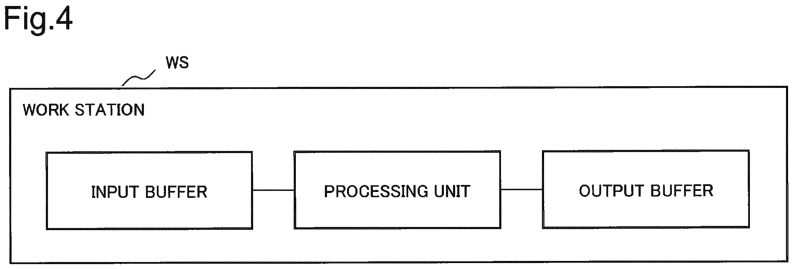

A configuration example of a WS in the present example embodiment is shown in Fig. 4. A WS in the present example embodiment includes an input buffer, a processing unit, and an output buffer. The processing unit is a part which performs processing such as production and inspection. The input buffer and the output buffer are parts which each store a stock of products in process, components, products, or the like (hereinafter referred to as products in process for simplification). The product in process is transferred by the transfer device 50, and stored in the input buffer. Then, after processing such as production and inspection, the product in process is stored in the output buffer until transferred by the transfer device 50.

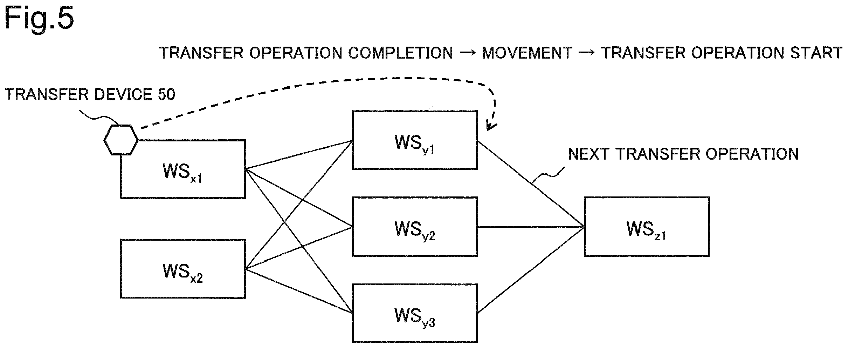

Next, a configuration example of an inter-WS network in the present example embodiment is shown in Fig. 5. In the present example embodiment, it is assumed that six WSs (WSₓ₁, WSₓ₂, WS_{y1}, WS_{y2}, WS_{y3}, and WS_{z1}) are present in a factory. Moreover, it is assumed that 9 links are present among the WSs. The link is equivalent to a pair of a transfer source WS and a transfer destination WS of a transfer operation by the transfer device 50.

Note that, in the present example embodiment, it is assumed that the transfer device 50 performs transfer from the WSₓ₁ and the WSₓ₂ to the WS_{y1}, the WS_{y2}, or the WS_{y3}, and from the WS_{y1}, the WS_{y2}, and the WS_{y3} to the WS_{z1}, and does not perform transfer of any combination other than the above. Moreover, it is assumed that the transfer device 50 performs neither transfer upstream from the WSₓ₁ and the WSₓ₂, nor transfer downstream from the WS_{z1}.

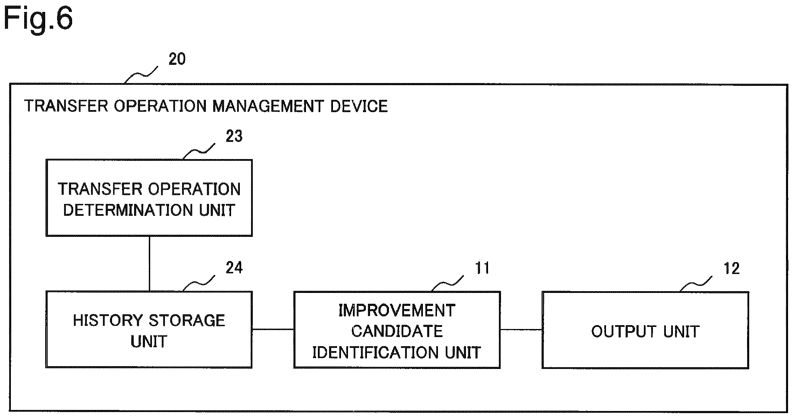

Next, a configuration example of the transfer operation management device 20 in the present example embodiment is shown in Fig. 6. The transfer operation management device 20 in the present example embodiment includes an improvement candidate identification unit 11, an output unit 12, a transfer operation determination unit 23, and a history storage unit 24.

The transfer operation determination unit 23 is a part which determines a transfer operation (a WS being a transfer source and a WS being a transfer destination of a product in process) suited to a situation. The transfer operation determination unit 23 determines, by any method, a transfer operation to be implemented by the transfer device 50. A conceivable method of determining a transfer operation is, for example, a method in which, based on a situation such as a workload, a stock amount of products in process in each WS, or a position of the transfer device 50, an operator determines, based on operator's experience, a transfer operation, and then inputs the determined transfer operation to the transfer operation determination unit 23. Alternatively, a method in which the transfer operation determination unit 23 automatically determines a transfer operation, based on a situation such as a workload, a stock amount of products in process in each WS, or a position of the transfer device 50, and the like may be conceivable.

Furthermore, the transfer operation determination unit 23 stores, in the history storage unit 24, a history related to a transfer operation determined to be implemented. In the present example embodiment, as a history related to a transfer operation, the transfer operation determination unit 23 stores, in the history storage unit 24, a history (transfer history) of a pair of a WS being a transfer source and a WS being a transfer destination of the transfer operation. Moreover, the transfer operation determination unit 23 stores, in the history storage unit 24, a history (movement history) of a pair of a WS being a movement source and a WS being a transfer source of movement from the WS (a position where a previous transfer operation is completed) being the movement source to the WS being a movement destination (transfer source) involved in the transfer operation. In this case, the transfer operation determination unit 23 may also accumulate, in the history storage unit 24, accompanying information such as stock amounts of an output buffer of a WS being a transfer source and an input buffer of a WS being a transfer destination during a transfer operation.

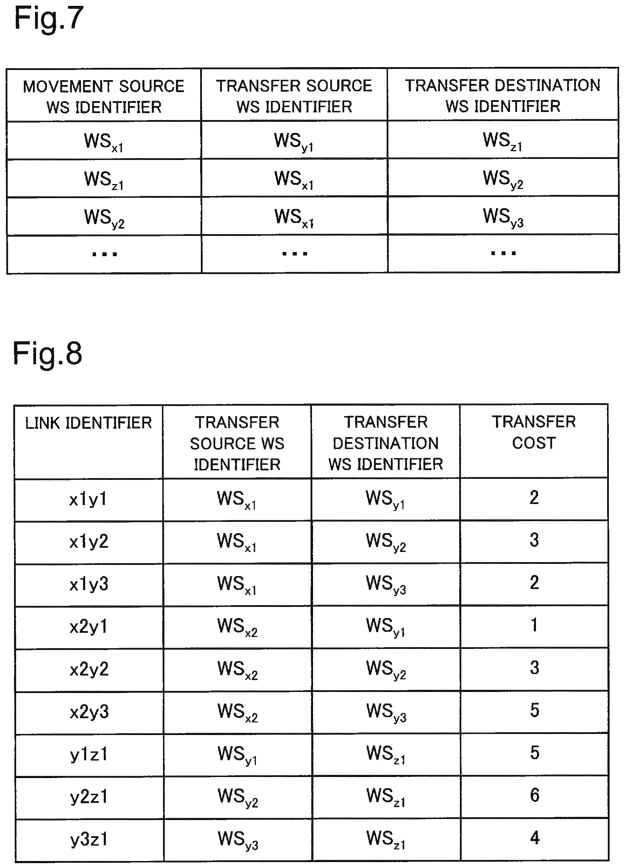

An example of a history related to a transfer operation stored by the history storage unit 24 is shown in Fig. 7. In this example, the history storage unit 24 stores a WS identifier of a movement source, a transfer source WS identifier, and a transfer destination WS identifier. For example, a first history from the top indicates that movement is made from the WSₓ₁ to the WS_{y1}, and a transfer operation from the WS_{y1} to the WS_{z1} is performed. Moreover, a second history indicates that movement is made from the WS_{z1} to the WSₓ₁, and a transfer operation from the WSₓ₁ to the WS_{y2} is performed.

Note that, the transfer operation determination unit 23 may store, in the history storage unit 24, only one of a transfer history and a movement history, as a history related to a transfer operation. For example, when an influence of movement from a WS being a movement source to a WS being a transfer source exerted on productivity is negligible in contrast to an influence of a transfer operation, the transfer operation determination unit 23 may store only a transfer history in the history storage unit 24. For example, an equivalent to this case is a case mostly including movement between the same WS (a WS being a movement source and a WS being a transfer source are the same), and rarely including movement between different WSs, and the like.

Contrarily, for example, in a case where an influence exerted on productivity by a transfer operation is negligible in contrast to an influence of movement, such as a case where a distance between a WS being a transfer source and a WS being a transfer destination is short, the transfer operation determination unit 23 may store only a transfer history in the history storage unit 24.

Furthermore, a transfer operation/movement targeted for storing a history in the history storage unit 24 by the transfer operation determination unit 23 may be a transfer operation/movement of every transfer device 50, or may be a transfer operation/movement of a predetermined transfer device 50. For example, only a transfer operation/movement of a transfer device 50 being present in a predetermined region, or a transfer operation/movement of a transfer device 50 transferring a predetermined product in process (e.g., a product of urgency) may be a transfer operation/movement targeted for storing a history in the history storage unit 24 by the transfer operation determination unit 23.

Still further, a transfer operation/movement targeted for storing a history in the history storage unit 24 by the transfer operation determination unit 23 may be a transfer operation/movement related to every WS, or may be only a predetermined transfer operation/movement. For example, only a transfer operation/movement related to a WS processing a particular product in process, a WS having a small buffer size, a WS having great processing capacity variation, or the like may be a transfer operation/movement targeted for storing a history in the history storage unit 24 by the transfer operation determination unit 23.

The improvement candidate identification unit 11 is a part which calculates, based on a history related to a transfer operation, a total transfer cost for each pair of WSs, and identifies a pair having a maximum total transfer cost as a pair to be improved most. Note that one or a plurality of pairs may be identified.

A total transfer cost is a cost required for a transfer operation, and movement involved in the transfer operation. A cost is a factor deteriorating productivity, and productivity becomes worse as a cost is great.

The output unit 12 is a part which outputs information of the identified pair.

Next, an example of a method of calculating a total transfer cost in the improvement candidate identification unit 11 is described.

First, the improvement candidate identification unit 11 adds up, based on a transfer history, the number of times of implementation of transfer operations (number of times of transfer implementation), for each transfer operation (a pair of a WS being a transfer source and a WS being a transfer destination) targeted for calculation of a total transfer cost. Next, the improvement candidate identification unit 11 calculates a total transfer cost, based on the number of times of transfer implementation and a transfer cost, for each pair of a WS being a transfer source and a WS being a transfer destination.

An example of a transfer cost in the present example embodiment is shown in Fig. 8. In the present example embodiment, a transfer cost is determined for each link identifier indicating a pair of a WS being a transfer source and a WS being a transfer destination. Each transfer cost indicates a cost when the transfer device 50 transfers a product in process from a WS indicated by a transfer source WS identifier to a WS indicated by a transfer destination WS identifier, i.e., a degree of an influence on productivity.

Furthermore, the improvement candidate identification unit 11 adds up, based on a transfer history, the number of times of implementation of movement (number of times of movement implementation), for each movement (a pair of a WS being a movement source and a WS being a transfer source) targeted for calculation of a total transfer cost. Next, the improvement candidate identification unit 11 calculates, based on the number of times of movement implementation and a movement cost, a total transfer cost, for each pair of a WS being a movement source and a WS being a transfer source.

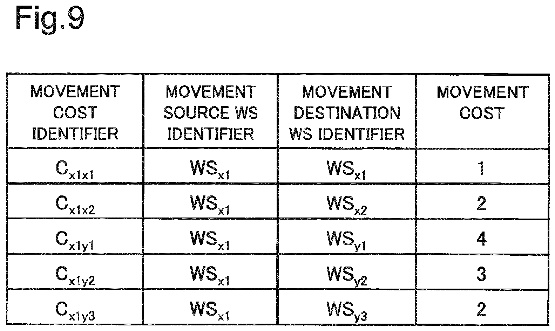

An example of a movement cost in the present example embodiment is shown in Fig. 9. In the present example embodiment, a movement cost is determined for each movement cost identifier indicating a pair of a WS being a movement source and a WS being a movement destination (transfer source). Each movement cost indicates a cost when the transfer device 50 moves from a WS (a location where a previous transfer operation is finished) indicated by a movement source WS identifier to a WS (a location where a product in process is carried out in a next transfer operation) indicated by a movement destination WS identifier, i.e., a degree of an influence on productivity.

A movement cost/transfer cost is a value calculated based on one or more criteria such as a distance of movement/transfer, a required time for movement/transfer, a kind of equipment (a cart, a forklift, or the like) required for a transfer operation, passage of a place interfering with another operation, and ease of passage of a route during movement/transfer. A conceivable criterion for ease of passage of a route is, for example, whether to pass through a narrow place, whether a slope or a step is present along a route, whether a limited number of elevators need to be utilized, or the like. Moreover, when a plurality of criteria are utilized for calculation of a movement cost/transfer cost, a value in which a calculation result by each criterion is multiplied by a predetermined weight and then added may be defined as a movement cost/transfer cost.

Furthermore, a movement cost/transfer cost may be automatically formed by the transfer operation management device 20 or another device, based on, for example, a layout drawing or the like of a factory or a warehouse. Alternatively, a movement cost/transfer cost may be input by an operator, a layout designer, or the like, or may be formed by combining a manual input and automatic formation.

In addition, a target for calculation of a total transfer cost may be every transfer/movement, or may be only transfer/movement having a movement transfer/movement cost greater than a predetermined value.

When the improvement candidate identification unit 11 calculates a total transfer cost of a pair of WSs, based on both a transfer history and a movement history, the total transfer cost may be, for example, a sum of a product of a transfer cost and the number of times of transfer implementation, and a sum of a product of a movement cost and the number of times of movement implementation. Alternatively, the total transfer cost may be a greater one of a product of a transfer cost and a number of times of transfer implementation, and a product of a movement cost and a number of times of movement implementation.

When a movement cost is small relative to a transfer cost and negligible, a total transfer cost may be a product of a transfer cost and the number of times of transfer implementation. For example, an equivalent to this case is such a case that a transfer distance from a WS being a transfer source to a WS being a transfer destination is long, a transfer time from a WS being a transfer source to a WS being a transfer destination is long, much labor is required for transfer, or one transferrable amount is small and transfer to a WS being a transfer destination is required with high frequency.

Contrarily, when a transfer cost is small relative to a movement cost and negligible, a total transfer cost may be a product of a movement cost and the number of times of movement implementation. For example, an equivalent to this case is such a case that a movement distance from a WS being a movement source to a WS being a transfer source is long, a required movement time is long, setting of a special transfer device 50 or equipment that takes time for preparation is required, an output buffer capacity of a WS is small and movement to a WS being a transfer source is required with high frequency.

By configuring the transfer operation management device 20 in this way, the transfer operation management device 20 calculates, based on a history related to a transfer operation, a total transfer cost for each pair of WSs, and identifies a pair having a maximum total transfer cost as a pair to be improved most. Consequently, the transfer operation management device 20 becomes able to identify a pair of WSs having a great cost related to a transfer operation and therefore having a great influence on productivity. Thus, it becomes possible to identify a transfer operation and movement having a great influence on productivity, the movement involved in the transfer operation.

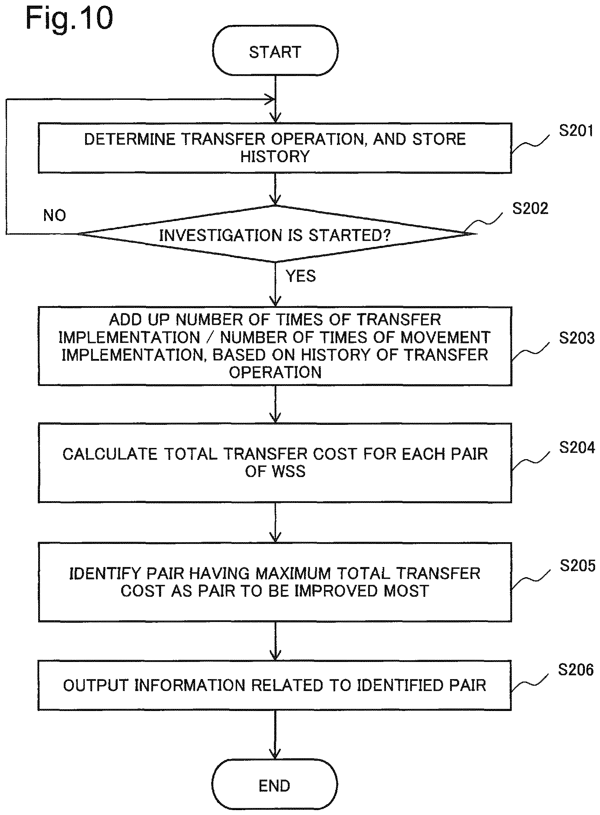

Next, an operation example of the transfer operation management device 20 in the present example embodiment is shown in Fig. 10.

First, the transfer operation determination unit 23 determines, according to a situation, a transfer operation (a pair of a WS being a transfer source and a WS being a transfer destination) to be implemented by the transfer device 50. Then, the transfer operation determination unit 23 stores, in the history storage unit 24, a history (transfer history) of the determined transfer operation, and a history (movement history) of a pair of a WS (a position where a previous transfer operation is completed) being a movement source and a WS being a transfer source (step S201).

Then, step S201 is repeated until investigation of a pair of WSs to be improved is started (NO in step S202).

When investigation of a pair of WSs to be improved is started (YES in step S202), the improvement candidate identification unit 11 adds up the number of times of transfer implementation and the number of times of movement implementation, based on the histories in the history storage unit 24 (step S203). In this case, the improvement candidate identification unit 11 adds up the number of times of transfer implementation for each pair of a WS being a transfer source and a WS being a transfer destination, and the number of times of movement implementation for each pair of a WS being a movement source and a WS being a transfer source.

Next, the improvement candidate identification unit 11 calculates a total transfer cost for each pair of WSs (step S204).

Next, the improvement candidate identification unit 11 identifies a pair of WSs having a maximum total transfer cost as a pair of WSs to be improved most (step S205). In this case, the improvement candidate identification unit 11 may identify only one pair of WSs, or may identify one or more pairs of WSs having higher total transfer costs.

Then, the output unit 12 outputs information of the pair of WSs identified by the improvement candidate identification unit 11 (step S206). For example, the output unit 12 presents information of the pair of WSs to a user by outputting the information to a display device or the like mounted on the transfer operation management device 20.

Next, an operation example of the transfer operation management device 20 in the present example embodiment is more specifically described.

First, it is assumed that an inter-WS network in the present example embodiment includes a configuration shown in Fig. 5. Moreover, it is assumed that a WS being a transfer source and a WS being a transfer destination are sufficiently close to each other, and an influence of a transfer cost on productivity is negligible relative to a movement cost. Further, it is assumed that a movement cost between WSs is a movement cost shown in Fig. 9.

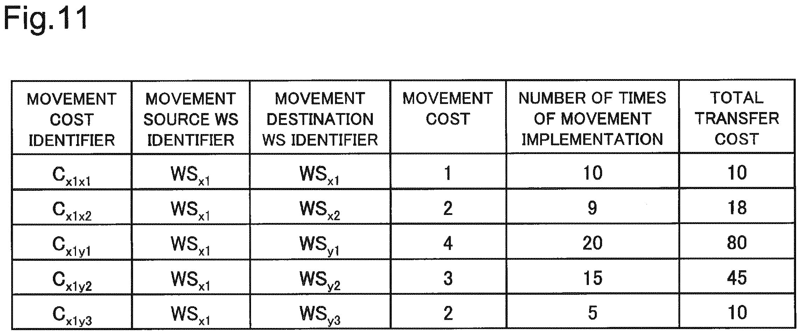

An example of a total transfer cost calculated by the improvement candidate identification unit 11 is shown in Fig. 11. In the example of Fig. 11, a product of a movement cost and the number of times of movement implementation is designated as a total transfer cost. In this way, the improvement candidate identification unit 11 calculates a total transfer cost for each movement cost identifier (a pair of a WS being a movement source and a WS being a transfer source (movement destination)).

In the case of Fig. 11, movement having a maximum total transfer cost is movement having a movement cost identifier being C_{x1y1}, i.e., movement from the WSₓ₁ to the WS_{y1}. Thus, the improvement candidate identification unit 11 identifies, as a pair of WSs to be improved most, a pair of the WSₓ₁ and the WS_{y1}.

Next, as another example, it is assumed that a WS being a movement source and a WS being a transfer source (movement destination) are sufficiently close to each other, and an influence of a movement cost on productivity is negligible relative to a transfer cost. Further, it is assumed that a transfer cost between WSs is a transfer cost shown in Fig. 8.

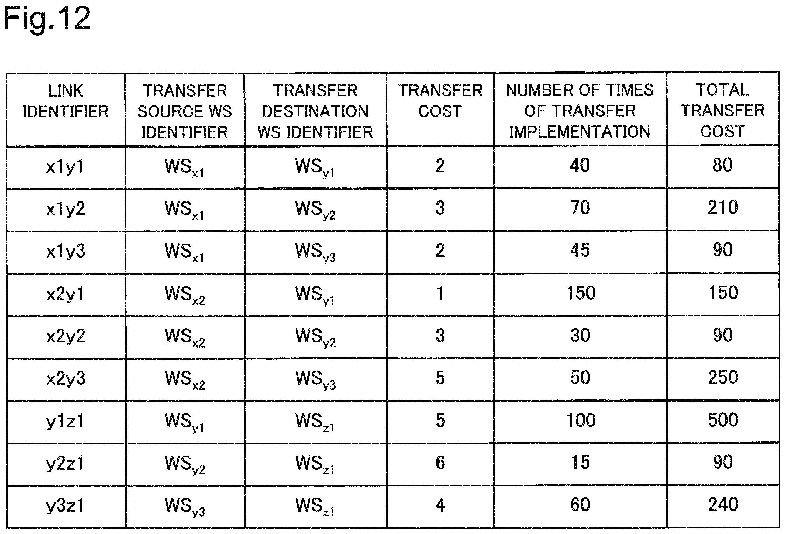

An example of a total transfer cost calculated by the improvement candidate identification unit 11 is shown in Fig. 12. In the example of Fig. 12, a product of a transfer cost and the number of times of transfer implementation is designated as a total transfer cost. In this way, the improvement candidate identification unit 11 calculates a total transfer cost for each link identifier (a pair of a WS being a transfer source and a WS being a transfer destination).

In the case of Fig. 12, a transfer operation having a maximum total transfer cost is a transfer operation having a link identifier being y1z1, i.e., a transfer operation from the WS_{y1} to the WS_{z1}. Thus, the improvement candidate identification unit 11 identifies, as a pair of WSs to be improved most, a pair of the WS_{y1} and the WS_{z1}.

By operating in this way, the transfer operation management device 20 calculates, based on a history related to a transfer operation, a total transfer cost for each pair of WSs, and identifies a pair having a maximum total transfer cost as a pair to be improved most. Consequently, the transfer operation management device 20 becomes able to identify a pair of WSs having a great cost related to a transfer operation and therefore having a great influence on productivity. Thus, it becomes possible to identify a transfer operation and movement having a great influence on productivity, the movement involved in the transfer operation.

As described above, in the second example embodiment of the present invention, the transfer operation management device 20 calculates, based on a history related to a transfer operation, a total transfer cost for each pair of work stations, and identifies a pair having a maximum total transfer cost as a pair to be improved most. Consequently, the transfer operation management device 20 becomes able to identify a pair of WSs having a great cost related to a transfer operation and therefore having a great influence on productivity. Thus, it becomes possible to identify a transfer operation and movement having a great influence on productivity, the movement involved in the transfer operation.

### [Third Example Embodiment]

Next, a third example embodiment of the present invention is described. A transfer operation management device 30 in the present example embodiment identifies a pair of WSs to be improved most, and further derives an improvement proposal for the pair.

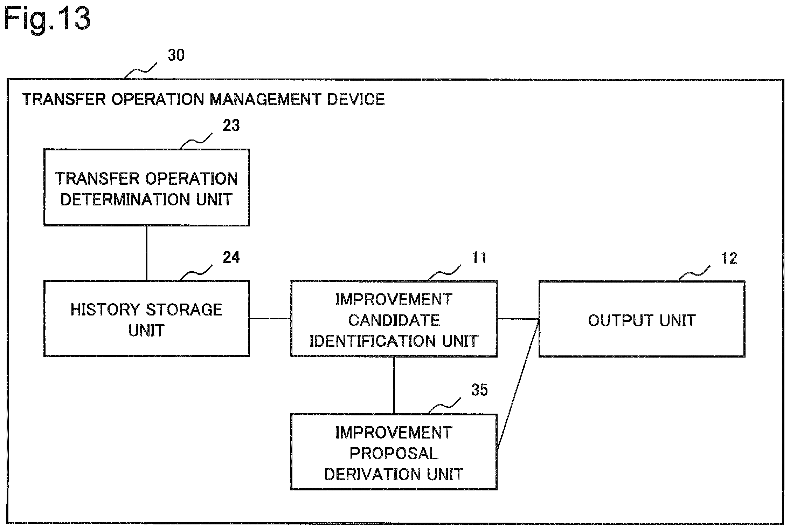

First, a configuration example of a transfer operation management device 30 in the present example embodiment is shown in Fig. 13. The transfer operation management device 30 in the present example embodiment includes an improvement candidate identification unit 11, an output unit 12, a transfer operation determination unit 23, a history storage unit 24, and an improvement proposal derivation unit 35.

The improvement candidate identification unit 11, the transfer operation determination unit 23, and the history storage unit 24 are similar to those in the second example embodiment, and therefore, description thereof is omitted.

The improvement proposal derivation unit 35 is a part which derives, as an improvement proposal, arrangement and a capacity of a buffer of a WS that decrease a total transfer cost for a pair of WSs identified by the improvement candidate identification unit 11.

For example, the improvement proposal derivation unit 35 derives one or more improvement proposals that decreases a total transfer cost for an identified pair of WSs to equal to or less than a value of a total transfer cost of a predetermined pair of WSs excluding the identified pair of WSs (e.g., a pair of WSs having a second highest total transfer cost). Alternatively, the improvement proposal derivation unit 35 may derive an improvement proposal that decreases a total transfer cost for an identified WS to equal to or less than a predetermined rate or a predetermined value. The improvement proposal derivation unit 35 may derive an improvement proposal with regard to the identified pair of WSs under predetermined limitations of a range where a WS can be arranged, a permissible range of a change of a buffer capacity, and the like.

As improvement proposals, the following examples can be cited, for example.
(1) A movement cost or a transfer cost is reduced by bringing a WS closer.
(2) The number of times of movement implementation and the number of times of transfer implementation are reduced by increasing a capacity of an input/output buffer of a WS. (More products in process can be transferred in one transfer operation by increasing a capacity of an input/output buffer.)
(3) More products in process can be transferred in one transfer operation by using a larger transfer device 50, an automated transfer device 50, or the like. (Increase transfer amount for one transfer operation.) Furthermore, when a stock amount in a buffer tends to be much smaller than a capacity thereof, the improvement proposal derivation unit 35 may propose, together with an improvement proposal, reducing waste by reducing a surplus capacity of a buffer and thus saving space required for the buffer.

The output unit 12 in the present example embodiment is a part which outputs an improvement proposal derived by the improvement proposal derivation unit 35, in addition to a pair of WSs identified by the improvement candidate identification unit 11. The output unit 12 outputs, for example, an improvement proposal to a display device mounted on the transfer operation management device 30. In this case, the output unit 12 may output only one improvement proposal, or may output a plurality of improvement proposals.

By configuring the transfer operation management device 30 in this way, the transfer operation management device 30 calculates, based on a history related to a transfer operation, a total transfer cost for each pair of WSs, and identifies a pair having a maximum total transfer cost as a pair to be improved most. Consequently, the transfer operation management device 30 becomes able to identify a pair of WSs having a great cost related to a transfer operation and therefore having a great influence on productivity. Thus, it becomes possible to identify a transfer operation and movement having a great influence on productivity, the movement involved in the transfer operation.

Furthermore, the transfer operation management device 30 in the present example embodiment derives an improvement proposal that decreases a total transfer cost of an identified pair of WSs. Consequently, it becomes possible to improve long-term transfer efficiency (productivity) by improving arrangement of a WS and a configuration (a buffer amount or the like) of a WS.

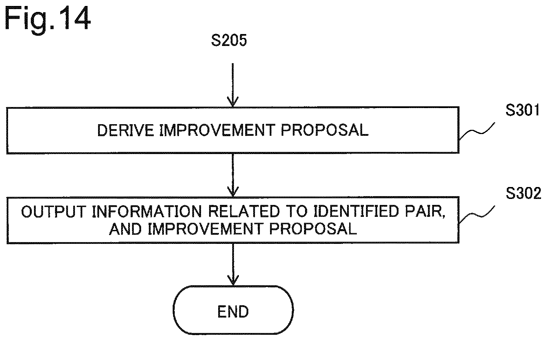

Next, an operation example of the transfer operation management device 30 in the present example embodiment is shown in Fig. 14.

Fig. 14 is an example of an operation performed by the transfer operation management device 30 instead of step S206 in Fig. 10. Operations from steps S201 to S205 in Fig. 10 are similar to the operation of the transfer operation management device 20 in the second example embodiment, and therefore, description thereof is omitted.

The improvement proposal derivation unit 35 derives, as an improvement proposal, arrangement of a WS and a capacity of a buffer that decrease a total transfer cost for a pair of WSs identified by the improvement candidate identification unit 11 (step S301).

Then, the output unit 12 outputs information of the pair of WSs identified by the improvement candidate identification unit 11, and the improvement proposal derived by the improvement proposal derivation unit 35 (step S302). In this case, for example, the output unit 12 presents information to a user by displaying the information on a display device or the like mounted on the transfer operation management device 30.

Next, an operation example of the transfer operation management device 30 in the present example embodiment is more specifically described.

For example, when a calculation result of a total transfer cost is in a state of Fig. 11, a movement cost identifier having a maximum total transfer cost is C_{x1y1}. This indicates movement from the WSₓ₁ to the WS_{y1}. Thus, the improvement candidate identification unit 11 identifies, as a pair of WSs to be improved most, a pair of the WSₓ₁ and the WS_{y1}.

Then, the improvement proposal derivation unit 35 derives an improvement proposal as in the following example for the pair of the WSₓ₁ and the WS_{y1}. Note that, herein, it is assumed that a movement cost is a value related to a movement distance, and the improvement proposal derivation unit 35 derives an improvement proposal that decreases a total transfer cost of the pair of the WSₓ₁ and the WS_{y1} to equal to or less than a value of a second greatest total transfer cost.

(1) Movement cost of pair of WSₓ₁ and WS_{y1} (4) - second greatest total transfer cost (45) ÷ number of times of movement implementation of pair of WSₓ₁ and WS_{y1} (20) = 1.75. Thus, shortening a distance between WSs (e.g., shortening the distance by 10 meters) in such a way as to reduce a movement cost by 1.75 or more (e.g., 2) is derived as an improvement proposal. Accordingly, each movement cost can be reduced, and a total transfer cost can be decreased.
(2) Total transfer cost of pair of WSₓ₁ and WS_{y1} (80) ÷ second greatest total transfer cost (45) = 1.78. Thus, increasing a capacity of an output buffer to 1.78 times or more (e.g., 2 times) is derived as an improvement proposal. Accordingly, the number of times of movement implementation can be reduced to 1/1.78 times or less (e.g., 1/2 times), and a total transfer cost can be decreased. (The number of times that the transfer device 50 goes to the WSₓ₁ to take a product in process can be reduced.)

Moreover, when a calculation result of a total transfer cost is in a state of Fig. 12, a link identifier having a maximum total transfer cost is ylzl. This indicates a transfer operation from the WS_{y1} to the WS_{z1}. Thus, the improvement candidate identification unit 11 identifies, as a pair of WSs to be improved most, a pair of the WS_{y1} and the WS_{z1}.

Then, the improvement proposal derivation unit 35 derives an improvement proposal as in the following example for the pair of the WS_{y1} and the WS_{z1}. Note that, herein, it is assumed that a transfer cost is a value related to a transfer distance, and the improvement proposal derivation unit 35 derives an improvement proposal that decreases a total transfer cost of the pair of the WS_{y1} and the WS_{z1} to equal to or less than a value of a second greatest total transfer cost.

(1) Transfer cost of pair of WS_{y1} and WS_{z1} (5) - second greatest total transfer cost (250) ÷ number of times of transfer implementation of pair of WS_{y1} and WS_{z1} (100) = 2.5. Thus, shortening a distance between WSs (e.g., shortening the distance by 2.5 meters) in such a way as to reduce a transfer cost by 2.5 or more is derived as an improvement proposal. Accordingly, each movement cost can be reduced, and a total transfer cost can be decreased.
(2) Total transfer cost of pair of WS_{y1} and WS_{z1} (500) ÷ second greatest total transfer cost (250) = 2. Thus, doubling each transfer amount, e.g., preparing a transfer device 50 which can carry double products in process each time is derived as an improvement proposal.

By operating in this way, the transfer operation management device 30 calculates, based on a history related to a transfer operation, a total transfer cost for each pair of WSs, and identifies a pair having a maximum total transfer cost as a pair to be improved most. Consequently, the transfer operation management device 30 becomes able to identify a pair of WSs having a great cost related to a transfer operation and therefore having a great influence on productivity. Thus, it becomes possible to identify a transfer operation and movement having a great influence on productivity, the movement involved in the transfer operation.

As described above, in the third example embodiment of the present invention, the transfer operation management device 30 calculates, based on a history related to a transfer operation, a total transfer cost for each pair of WSs, and identifies a pair having a maximum total transfer cost as a pair to be improved most. Consequently, the transfer operation management device 30 becomes able to identify a pair of WSs having a great cost related to a transfer operation and therefore having a great influence on productivity. Thus, it becomes possible to identify a transfer operation and movement having a great influence on productivity, the movement involved in the transfer operation.

Furthermore, the transfer operation management device 30 in the present example embodiment derives an improvement proposal that decreases a total transfer cost of an identified pair of WSs. Consequently, it becomes possible to improve long-term transfer efficiency (productivity) by improving arrangement of a WS and a configuration (a buffer amount or the like) of a WS.

### [Hardware Configuration Example]

A configuration example of a hardware resource which implements, by use of one information processing device (computer), the transfer operation management device (10, 20, 30) in each example embodiment of the present invention described above is described. Note that the transfer operation management device may be physically or functionally implemented by use of at least two information processing devices. Moreover, the transfer operation management device may be implemented as a dedicated device. Further, only some functions of the transfer operation management device may be implemented by use of an information processing device.

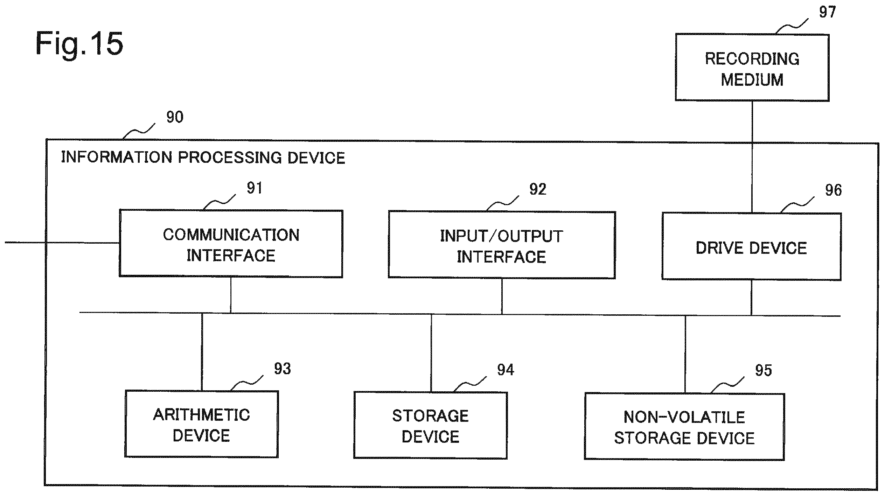

Fig. 15 is a diagram schematically showing a hardware configuration example of an information processing device being capable of implementing the transfer operation management device in each example embodiment of the present invention. An information processing device 90 includes a communication interface 91, an input/output interface 92, an arithmetic device 93, a storage device 94, a non-volatile storage device 95, and a drive device 96.

The communication interface 91 is a communication means with which the transfer operation management device in each example embodiment communicates with an external device in a wired or wireless way. Note that, when the transfer operation management device is implemented by use of at least two information processing devices, the devices may be connected to each other in such a way as to be able to mutually communicate via the communication interface 91.

The input/output interface 92 is a man machine interface such as a keyboard being one example of an input device, or a display as an output device.

The arithmetic device 93 is an arithmetic processing device such as a general-purpose central processing unit (CPU) or a microprocessor. The arithmetic device 93 can read, for example, various programs stored in the non-volatile storage device 95, into the storage device 94, and execute processing in accordance with the read program.

The storage device 94 is a memory device such as a random access memory (RAM) which can be referred to from the arithmetic device 93, and stores a program, various data, and the like. The storage device 94 may be a volatile memory device.

The non-volatile storage device 95 is a non-volatile storage device such as a read only memory (ROM), a flash memory, or the like, and can store various programs, data, and the like.

The drive device 96 is, for example, a device which processes reading and writing of data from and into a recording medium 97 described later.

The recording medium 97 is any recording medium such as an optical disk, a magneto-optical disk, a semiconductor flash memory or the like being capable of recording data.

Each example embodiment of the present invention may be implemented by, for example, configuring a transfer operation management device by the information processing device 90 exemplified in Fig. 15, and supplying this transfer operation management device with a program being capable of implementing a function described in each of the example embodiments described above.

In this case, the arithmetic device 93 executes the program supplied to the transfer operation management device, and thereby, an example embodiment can be implemented. Moreover, not all but some of the functions of the transfer operation management device can be configured by the information processing device 90.

Furthermore, the present invention may be configured in such a way that the program described above is recorded in the recording medium 97, and appropriately stored in the non-volatile storage device 95 at a shipment stage, an operation stage, or the like of the transfer operation management device. Note that, in this case, a method of installing the program described above into the transfer operation management device by utilizing a suitable jig at a manufacturing stage before shipment, an operation stage, or the like may be adopted as a method of supplying the program described above. Moreover, a general procedure such as a method of externally downloading the program described above via a communication line such as the Internet may be adopted as a method of supplying the program described above.

The whole or part of the example embodiments disclosed above can be described as, but not limited to, the following supplementary notes.

### (Supplementary note 1)

A transfer operation management device comprising:
an improvement candidate identification means for calculating, based on a history related to a transfer operation, a total transfer cost for each pair of work stations, and identifying the pair having the maximum total transfer cost as the pair to be improved most; and
an output means for outputting information of the identified pair.

### (Supplementary note 2)

The transfer operation management device according to supplementary note 1, wherein
the pair of the work stations is at least either the pair of the work station being a transfer source and the work station being a transfer destination of the transfer operation, or the pair of the work station being a movement source and the work station being the transfer source of movement from the work station being the movement source to the work station being the transfer source involved in the transfer operation, and
the history related to the transfer operation is the history of the pair.

### (Supplementary note 3)

The transfer operation management device according to supplementary note 2, wherein
when performing the calculation of the total transfer cost, based on the history of the pair in the transfer operation, the improvement candidate identification means performs the calculation of the total transfer cost, based on a transfer cost of the transfer operation, and
when performing the calculation of the total transfer cost, based on the history of the pair in the movement, the improvement candidate identification means performs the calculation of the total transfer cost, based on a movement cost of the movement.

### (Supplementary note 4)

The transfer operation management device according to supplementary note 3, wherein
each of the transfer cost and the movement cost is a value, based on one or more criteria being a distance, a required time, a kind of required equipment, passage of a place interfering with another operation, and ease of passage of a route.

### (Supplementary note 5)

The transfer operation management device according to supplementary note 3 or 4, wherein
the total transfer cost is a product of the transfer cost and a number of times of transfer implementation in the transfer operation, a product of the movement cost and a number of times of movement implementation in the movement, a sum of a product of the transfer cost and the number of times of transfer implementation and a product of the movement cost and the number of times of movement implementation, or a greater one of a product of the transfer cost and the number of times of transfer implementation and a product of the movement cost and the number of times of movement implementation.

### (Supplementary note 6)

The transfer operation management device according to any one of supplementary notes 3 to 5, wherein
when the calculation of the total transfer cost is performed, based on the history of the pair in the transfer operation, the pair targeted for the calculation of the total transfer cost is the pair having the transfer cost greater than a predetermined value, and
when the calculation of the total transfer cost is performed, based on the history of the pair in the movement, the pair targeted for the calculation of the total transfer cost is the pair having the movement cost greater than a predetermined value.

### (Supplementary note 7)

The transfer operation management device according to any one of supplementary notes 1 to 6, further comprising
a transfer operation determination means for determining the work station related to the transfer operation to be implemented, and storing the history in a history storage unit.

### (Supplementary note 8)

The transfer operation management device according to any one of supplementary notes 1 to 7, further comprising
an improvement proposal derivation means for deriving an improvement proposal that decreases the total transfer cost of the identified pair, wherein
the output means further outputs the improvement proposal.

### (Supplementary note 9)

The transfer operation management device according to supplementary note 8, wherein
the improvement proposal is the improvement proposal that decreases the total transfer cost of the identified pair to equal to or less than a value of the total transfer cost of the predetermined pair except for the identified pair, equal to or less than a predetermined value, or equal to or less than a predetermined rate.

### (Supplementary note 10)

The transfer operation management device according to supplementary note 8 or 9, wherein
the improvement proposal is the improvement proposal related to one or more of arrangement of the pair of the work stations, a buffer capacity of the work station, and a transfer amount for each of the transfer operations.

### (Supplementary note 11)

A transfer operation management system comprising:
the transfer operation management device according to any one of supplementary notes 1 to 10; and
the work station.

### (Supplementary note 12)

A transfer operation management method comprising:
calculating, based on a history related to a transfer operation, a total transfer cost for each pair of work stations;
identifying the pair having the maximum total transfer cost as the pair to be improved most; and
outputting information of the identified pair.

### (Supplementary note 13)

The transfer operation management method according to supplementary note 12, wherein
the pair of the work stations is at least either the pair of the work station being a transfer source and the work station being a transfer destination of the transfer operation, or the pair of the work station being a movement source and the work station being the transfer source of movement from the work station being the movement source to the work station being the transfer source involved in the transfer operation, and
the history related to the transfer operation is the history of the pair.

### (Supplementary note 14)

The transfer operation management method according to supplementary note 13, further comprising,
when performing the calculation of the total transfer cost, based on the history of the pair in the transfer operation, performing the calculation of the total transfer cost, based on a transfer cost of the transfer operation, and
when performing the calculation of the total transfer cost, based on the history of the pair in the movement, performing the calculation of the total transfer cost, based on a movement cost of the movement.

### (Supplementary note 15)

The transfer operation management method according to supplementary note 14, wherein
each of the transfer cost and the movement cost is a value based on one or more criteria being a distance, a required time, a kind of required equipment, passage of a place interfering with another operation, and ease of passage of a route.

### (Supplementary note 16)

The transfer operation management method according to supplementary note 14 or 15, wherein
the total transfer cost is a product of the transfer cost and a number of times of transfer implementation in the transfer operation, a product of the movement cost and a number of times of movement implementation in the movement, a sum of a product of the transfer cost and the number of times of transfer implementation and a product of the movement cost and the number of times of movement implementation, or a greater one of a product of the transfer cost and the number of times of transfer implementation and a product of the movement cost and the number of times of movement implementation.

### (Supplementary note 17)

The transfer operation management method according to any one of supplementary notes 14 to 16, wherein,
when the calculation of the total transfer cost is performed, based on the history of the pair in the transfer operation, the pair targeted for the calculation of the total transfer cost is the pair having the transfer cost greater than a predetermined value, and
when the calculation of the total transfer cost is performed, based on the history of the pair in the movement, the pair targeted for the calculation of the total transfer cost is the pair having the movement cost greater than a predetermined value.

### (Supplementary note 18)

The transfer operation management method according to any one of supplementary notes 12 to 17, further comprising
determining the work station related to the transfer operation to be implemented, and storing the history in a history storage unit.

### (Supplementary note 19)

The transfer operation management method according to any one of supplementary notes 12 to 18, further comprising:
deriving an improvement proposal that decreases the total transfer cost of the identified pair; and
outputting the improvement proposal.

### (Supplementary note 20)

The transfer operation management method according to supplementary note 19, wherein
the improvement proposal is the improvement proposal that decreases the total transfer cost of the identified pair to equal to or less than a value of the total transfer cost of the predetermined pair except for the identified pair, equal to or less than a predetermined value, or equal to or less than a predetermined rate.

### (Supplementary note 21)

The transfer operation management method according to supplementary note 19 or 20, wherein
the improvement proposal is the improvement proposal related to one or more of arrangement of the pair of the work stations, a buffer capacity of the work station, and a transfer amount for each of the transfer operations.

### (Supplementary note 22)

A computer readable recording medium recorded with a transfer operation management program causing a computer to execute:
an improvement candidate identification function of calculating, based on a history related to a transfer operation, a total transfer cost for each pair of work stations, and identifying the pair having the maximum total transfer cost as the pair to be improved most; and
an output function of outputting information of the identified pair.

### (Supplementary note 23)

The computer readable recording medium recorded with the transfer operation management program according to supplementary note 22, wherein
the pair of the work stations is at least either the pair of the work station being a transfer source and the work station being a transfer destination of the transfer operation, or the pair of the work station being a movement source and the work station being the transfer source of movement from the work station being the movement source to the work station being the transfer source involved in the transfer operation, and
the history related to the transfer operation is the history of the pair.

### (Supplementary note 24)

The computer readable recording medium recorded with the transfer operation management program according to supplementary note 23, wherein,
when performing the calculation of the total transfer cost, based on the history of the pair in the transfer operation, the improvement candidate identification function performs the calculation of the total transfer cost, based on a transfer cost of the transfer operation, and
when performing the calculation of the total transfer cost, based on the history of the pair in the movement, the improvement candidate identification function performs the calculation of the total transfer cost, based on a movement cost of the movement.

### (Supplementary note 25)

The computer readable recording medium recorded with the transfer operation management program according to supplementary note 24, wherein
each of the transfer cost and the movement cost is a value based on one or more criteria being a distance, a required time, a kind of required equipment, passage of a place interfering with another operation, and ease of passage of a route.

### (Supplementary note 26)

The computer readable recording medium recorded with the transfer operation management program according to supplementary note 24 or 25, wherein
the total transfer cost is a product of the transfer cost and a number of times of transfer implementation in the transfer operation, a product of the movement cost and a number of times of movement implementation in the movement, a sum of a product of the transfer cost and the number of times of transfer implementation and a product of the movement cost and the number of times of movement implementation, or a greater one of a product of the transfer cost and the number of times of transfer implementation and a product of the movement cost and the number of times of movement implementation.

### (Supplementary note 27)

The computer readable recording medium recorded with the transfer operation management program according to any one of supplementary notes 24 to 26, wherein,
when the calculation of the total transfer cost is performed, based on the history of the pair in the transfer operation, the pair targeted for the calculation of the total transfer cost is the pair having the transfer cost greater than a predetermined value, and
when the calculation of the total transfer cost is performed, based on the history of the pair in the movement, the pair targeted for the calculation of the total transfer cost is the pair having the movement cost greater than a predetermined value.

### (Supplementary note 28)

The computer readable recording medium recorded with the transfer operation management program according to any one of supplementary notes 22 to 27, further causing a computer to execute
a transfer operation determination function of determining the work station related to the transfer operation to be implemented, and storing the history in a history storage unit.

### (Supplementary note 29)

The computer readable recording medium recorded with the transfer operation management program according to any one of supplementary notes 22 to 28, further causing a computer to execute
an improvement proposal derivation function of deriving an improvement proposal that decreases the total transfer cost of the identified pair, wherein
the output function further outputs the improvement proposal.

### (Supplementary note 30)

The computer readable recording medium recorded with the transfer operation management program according to supplementary note 29, wherein
the improvement proposal is the improvement proposal that decreases the total transfer cost of the identified pair to equal to or less than a value of the total transfer cost of the predetermined pair except for the identified pair, equal to or less than a predetermined value, or equal to or less than a predetermined rate.

### (Supplementary note 31)

The computer readable recording medium recorded with the transfer operation management program according to supplementary note 29 or 30, wherein
the improvement proposal is the improvement proposal related to one or more of arrangement of the pair of the work stations, a buffer capacity of the work station, and a transfer amount for each of the transfer operations.

While the invention has been particularly shown and described with reference to example embodiments thereof, the invention is not limited to these embodiments. It will be understood by those of ordinary skill in the art that various changes in form and details may be made therein without departing from the spirit and scope of the present invention as defined by the claims.

### [Reference signs List]

- 10, 20, 30: Transfer operation management device
- 11: Improvement candidate identification unit
- 12: Output unit
- 23: Transfer operation determination unit
- 24: History storage unit
- 35: Improvement proposal derivation unit
- 50: Transfer device
- 90: Information processing device
- 91: Communication interface
- 92: Input/output interface
- 93: Arithmetic device
- 94: Storage device
- 95: Non-volatile storage device
- 96: Drive device
- 97: Recording medium

## Claims

1. A transfer operation management device comprising:
an improvement candidate identification means for calculating, based on a history related to a transfer operation, a total transfer cost for each pair of work stations, and identifying the pair having the maximum total transfer cost as the pair to be improved most; and
an output means for outputting information of the identified pair.

2. The transfer operation management device according to claim 1, wherein
the pair of the work stations is at least either the pair of the work station being a transfer source and the work station being a transfer destination of the transfer operation, or the pair of the work station being a movement source and the work station being the transfer source of movement from the work station being the movement source to the work station being the transfer source involved in the transfer operation, and
the history related to the transfer operation is the history of the pair.

3. The transfer operation management device according to claim 2, wherein
when performing the calculation of the total transfer cost, based on the history of the pair in the transfer operation, the improvement candidate identification means performs the calculation of the total transfer cost, based on a transfer cost of the transfer operation, and
when performing the calculation of the total transfer cost, based on the history of the pair in the movement, the improvement candidate identification means performs the calculation of the total transfer cost, based on a movement cost of the movement.

4. The transfer operation management device according to claim 3, wherein
each of the transfer cost and the movement cost is a value, based on one or more criteria being a distance, a required time, a kind of required equipment, passage of a place interfering with another operation, and ease of passage of a route.

5. The transfer operation management device according to claim 3 or 4, wherein
the total transfer cost is a product of the transfer cost and a number of times of transfer implementation in the transfer operation, a product of the movement cost and a number of times of movement implementation in the movement, a sum of a product of the transfer cost and the number of times of transfer implementation and a product of the movement cost and the number of times of movement implementation, or a greater one of a product of the transfer cost and the number of times of transfer implementation and a product of the movement cost and the number of times of movement implementation.

6. The transfer operation management device according to any one of claims 3 to 5, wherein
when the calculation of the total transfer cost is performed, based on the history of the pair in the transfer operation, the pair targeted for the calculation of the total transfer cost is the pair having the transfer cost greater than a predetermined value, and
when the calculation of the total transfer cost is performed, based on the history of the pair in the movement, the pair targeted for the calculation of the total transfer cost is the pair having the movement cost greater than a predetermined value.

7. The transfer operation management device according to any one of claims 1 to 6, further comprising
a transfer operation determination means for determining the work station related to the transfer operation to be implemented, and storing the history in a history storage unit.

8. The transfer operation management device according to any one of claims 1 to 7, further comprising
an improvement proposal derivation means for deriving an improvement proposal that decreases the total transfer cost of the identified pair, wherein
the output means further outputs the improvement proposal.

9. The transfer operation management device according to claim 8, wherein
the improvement proposal is the improvement proposal that decreases the total transfer cost of the identified pair to equal to or less than a value of the total transfer cost of the predetermined pair except for the identified pair, equal to or less than a predetermined value, or equal to or less than a predetermined rate.

10. The transfer operation management device according to claim 8 or 9, wherein
the improvement proposal is the improvement proposal related to one or more of arrangement of the pair of the work stations, a buffer capacity of the work station, and a transfer amount for each of the transfer operations.

11. A transfer operation management system comprising:
the transfer operation management device according to any one of claims 1 to 10; and
the work station.

12. A transfer operation management method comprising:
calculating, based on a history related to a transfer operation, a total transfer cost for each pair of work stations;
identifying the pair having the maximum total transfer cost as the pair to be improved most; and
outputting information of the identified pair.

13. The transfer operation management method according to claim 12, wherein
the pair of the work stations is at least either the pair of the work station being a transfer source and the work station being a transfer destination of the transfer operation, or the pair of the work station being a movement source and the work station being the transfer source of movement from the work station being the movement source to the work station being the transfer source involved in the transfer operation, and
the history related to the transfer operation is the history of the pair.

14. The transfer operation management method according to claim 13, further comprising,
when performing the calculation of the total transfer cost, based on the history of the pair in the transfer operation, performing the calculation of the total transfer cost, based on a transfer cost of the transfer operation, and
when performing the calculation of the total transfer cost, based on the history of the pair in the movement, performing the calculation of the total transfer cost, based on a movement cost of the movement.

15. The transfer operation management method according to claim 14, wherein
each of the transfer cost and the movement cost is a value based on one or more criteria being a distance, a required time, a kind of required equipment, passage of a place interfering with another operation, and ease of passage of a route.

16. The transfer operation management method according to claim 14 or 15, wherein
the total transfer cost is a product of the transfer cost and a number of times of transfer implementation in the transfer operation, a product of the movement cost and a number of times of movement implementation in the movement, a sum of a product of the transfer cost and the number of times of transfer implementation and a product of the movement cost and the number of times of movement implementation, or a greater one of a product of the transfer cost and the number of times of transfer implementation and a product of the movement cost and the number of times of movement implementation.

17. The transfer operation management method according to any one of claims 14 to 16, wherein,
when the calculation of the total transfer cost is performed, based on the history of the pair in the transfer operation, the pair targeted for the calculation of the total transfer cost is the pair having the transfer cost greater than a predetermined value, and
when the calculation of the total transfer cost is performed, based on the history of the pair in the movement, the pair targeted for the calculation of the total transfer cost is the pair having the movement cost greater than a predetermined value.

18. The transfer operation management method according to any one of claims 12 to 17, further comprising
determining the work station related to the transfer operation to be implemented, and storing the history in a history storage unit.

19. The transfer operation management method according to any one of claims 12 to 18, further comprising:
deriving an improvement proposal that decreases the total transfer cost of the identified pair; and
outputting the improvement proposal.

20. The transfer operation management method according to claim 19, wherein
the improvement proposal is the improvement proposal that decreases the total transfer cost of the identified pair to equal to or less than a value of the total transfer cost of the predetermined pair except for the identified pair, equal to or less than a predetermined value, or equal to or less than a predetermined rate.

21. The transfer operation management method according to claim 19 or 20, wherein
the improvement proposal is the improvement proposal related to one or more of arrangement of the pair of the work stations, a buffer capacity of the work station, and a transfer amount for each of the transfer operations.

22. A computer readable recording medium recorded with a transfer operation management program causing a computer to execute:
an improvement candidate identification function of calculating, based on a history related to a transfer operation, a total transfer cost for each pair of work stations, and identifying the pair having the maximum total transfer cost as the pair to be improved most; and
an output function of outputting information of the identified pair.

23. The computer readable recording medium recorded with the transfer operation management program according to claim 22, wherein
the pair of the work stations is at least either the pair of the work station being a transfer source and the work station being a transfer destination of the transfer operation, or the pair of the work station being a movement source and the work station being the transfer source of movement from the work station being the movement source to the work station being the transfer source involved in the transfer operation, and
the history related to the transfer operation is the history of the pair.

24. The computer readable recording medium recorded with the transfer operation management program according to claim 23, wherein,
when performing the calculation of the total transfer cost, based on the history of the pair in the transfer operation, the improvement candidate identification function performs the calculation of the total transfer cost, based on a transfer cost of the transfer operation, and
when performing the calculation of the total transfer cost, based on the history of the pair in the movement, the improvement candidate identification function performs the calculation of the total transfer cost, based on a movement cost of the movement.

25. The computer readable recording medium recorded with the transfer operation management program according to claim 24, wherein
each of the transfer cost and the movement cost is a value based on one or more criteria being a distance, a required time, a kind of required equipment, passage of a place interfering with another operation, and ease of passage of a route.

26. The computer readable recording medium recorded with the transfer operation management program according to claim 24 or 25, wherein
the total transfer cost is a product of the transfer cost and a number of times of transfer implementation in the transfer operation, a product of the movement cost and a number of times of movement implementation in the movement, a sum of a product of the transfer cost and the number of times of transfer implementation and a product of the movement cost and the number of times of movement implementation, or a greater one of a product of the transfer cost and the number of times of transfer implementation and a product of the movement cost and the number of times of movement implementation.

27. The computer readable recording medium recorded with the transfer operation management program according to any one of claims 24 to 26, wherein,
when the calculation of the total transfer cost is performed, based on the history of the pair in the transfer operation, the pair targeted for the calculation of the total transfer cost is the pair having the transfer cost greater than a predetermined value, and
when the calculation of the total transfer cost is performed, based on the history of the pair in the movement, the pair targeted for the calculation of the total transfer cost is the pair having the movement cost greater than a predetermined value.

28. The computer readable recording medium recorded with the transfer operation management program according to any one of claims 22 to 27, further causing a computer to execute
a transfer operation determination function of determining the work station related to the transfer operation to be implemented, and storing the history in a history storage unit.

29. The computer readable recording medium recorded with the transfer operation management program according to any one of claims 22 to 28, further causing a computer to execute
an improvement proposal derivation function of deriving an improvement proposal that decreases the total transfer cost of the identified pair, wherein
the output function further outputs the improvement proposal.

30. The computer readable recording medium recorded with the transfer operation management program according to claim 29, wherein
the improvement proposal is the improvement proposal that decreases the total transfer cost of the identified pair to equal to or less than a value of the total transfer cost of the predetermined pair except for the identified pair, equal to or less than a predetermined value, or equal to or less than a predetermined rate.

31. The computer readable recording medium recorded with the transfer operation management program according to claim 29 or 30, wherein
the improvement proposal is the improvement proposal related to one or more of arrangement of the pair of the work stations, a buffer capacity of the work station, and a transfer amount for each of the transfer operations.
